# EUROPÄISCHE PATENTSCHRIFT

(11) **EP 1 605 538 B1**
(45) Veröffentlichungstag und Bekanntmachung des Hinweises auf die Patenterteilung: **20.08.2008**
(21) Anmeldenummer: 05009995.1
(22) Anmeldetag: 07.05.2005
(51) Int. Cl.: H01M 8/02, H01M 8/10

(54) **Verspannung einer Niedertemperatur-Brennstoffzelle**
Fastening of a low temperature fuel cell
Serrage d'une pile à combustible basse température

(30) Priorität: 12.06.2004 DE 102004028625
(43) Veröffentlichungstag der Anmeldung: 14.12.2005
(73) Patentinhaber: Forschungszentrum Jülich GmbH, 52425 Jülich (DE)
(72) Erfinder: Schonert, Morten, 31171 Nordstemmen (DE); Müller, Martin, 53115 Bonn (DE); Egmen, Ayhan, 52428 Jülich (DE)

(56) Entgegenhaltungen:
- WO-A-02/093669
- US-A- 3 251 718
- US-A1- 2004 086 766

## Beschreibung

Die Erfindung betrifft eine Niedertemperatur-Brennstoffzelle, insbesondere eine Brennstoffzelle, die als Testzelle eingesetzt werden kann.

### Stand der Technik

Brennstoffzellen, insbesondere Testzellen, weisen in der Regel rechteckige Bauteile, wie die Membran-Elektroden Einheit (MEA) oder die Flowfieldplatten auf. Die Verbindung der einzelnen Bauteile in einer Zelle erfolgt üblicherweise durch Verschrauben aller Bauteile. Dabei ist ein Schraubenkranz mit mindestens vier Schrauben vorgesehen, der die komplette Brennstoffzelle zusammenhält und verbindet. Diese werden beim Zusammenbau abwechselnd mit definierter Kraft (Drehmoment) angezogen. Die Flowfield Platten sind in der Regel fester Bestandteil der Brennstoffzelle, bzw. so in die Brennstoffzelle integriert, dass ein Wechsel der Flowfield Platten nur über eine komplette Demontage der Brennstoffzelle, das bedeutet über das Lösen der kompletten Verschraubung ermöglicht wird.

Es ist bekannt, dass die Leistungsfähigkeit einer Brennstoffzelle unter anderem auch stark von dem Anpressdruck der Flowfield Platten auf die Membran-Elektroden-Einheit und die Art der Flowfield Platten abhängt.

Insbesondere bei einer als Testzelle fungierenden Brennstoffzelle, die verschiedene Flowfield Geometrien unter sonst identischen Bedingungen testen soll, gestaltet sich der Ein- und Ausbau von verschiedenen Flowfield Platten als sehr aufwändig. Bei der Demontage kann es nachteilig zu einer Beschädigung der Membran-Elektroden-Einheit kommen. Weiter können dabei auch Undichtigkeiten aufgrund mangelnder Abdichtung auftreten.

Eine Untersuchung von unterschiedlichen Flowfield Geometrien mit derselben Membran-Elektroden-Einheit wird hierdurch regelmäßig erschwert. Man kann sich in der Regel nicht sicher sein, ob eine Änderung der elektrochemischen Leistung nicht auf eine beschädigte Membran-Elektroden-Einheit oder sonstige Undichtigkeiten zurückzuführen ist. Dies gilt in gleichem Maße auch für die Untersuchungen von unterschiedlichen Gasdiffusionsschichten (GDLs).

Ferner ist es bislang durch die Art der Verschraubung nur möglich einen gemeinsamen Anpressdruck für die gesamte Zelle zu erzeugen. Das bedeutet, dass zwar von außen ein Druck aus die Brennstoffzelle aufgebaut wird, man aber innerhalb der Zelle nicht exakt weiß, welcher reale Anpressdruck zwischen den einzelnen Bauteilen vorliegt, da sich innerhalb der Brennstoffzelle durch unterschiedliche Dichtungen der von außen angelegte Druck unterschiedlich verteilt.

### Aufgabe und Lösung

Aufgabe der Erfindung ist es, eine Brennstoffzelle zu schaffen, die insbesondere den einfachen und reproduzierbaren Ein- und Ausbau von unterschiedlichen Flowfield Platten und GDSs ermöglicht. Ferner ist es die Aufgabe, eine Brennstoffzelle zur Verfügung zu stellen, bei der die Rahmenbedingungen für unterschiedliche Flowfields und/oder Gasdiffusionsschichten möglichst identisch eingestellt werden können.

Die Aufgaben der Erfindung werden gelöst durch eine Brennstoffzelle mit der Gesamtheit an Merkmalen gemäß Hauptanspruch. Vorteilhafte Ausführungen der Brennstoffzellen finden sich in den darauf rückbezogenen Ansprüchen.

### Gegenstand der Erfindung

Der Gegenstand der Erfindung betrifft ein neuartiges Konzept zum Zusammenbau einer Brennstoffzelle. Dabei wird zunächst nur die Membran-Elektroden-Einheit an sich verbunden, während unabhängig davon der An- und Abbau verschiedener Flowfield Platten und Gasdiffusionsschichten möglich ist.

Die Membran-Elektroden-Einheit wird dabei nicht not wendigerweise wie üblich durch einen Schraubenkranz, sondern vorteilhaft durch einen Spannring verspannt. Dazu wird die Brennstoffzelle vorteilhaft in einer runden Form ausgeführt. Neben einer runden Ausgestaltung der Membran-Elektroden-Einheit ist auch die herkömmliche rechteckige Form der Membran-Elektroden-Einheit einsetzbar. Im letzten Fall ist diese dann allerdings durch einen zusätzlichen Rahmen, beispielsweise in Form eines kompakten Rahmens oder einzelner Rahmenstücke, versehen, die dem Spannring entsprechende Angriffspunkte liefert. In einer Ausführungsform ist beispielsweise eine rechteckige, bzw. quadratische Membran-Elektroden-Einheit in einen runden Rahmen eingepasst.

Durch die runde Bauform der Brennstoffzelle ist es möglich die Brennstoffzelle mittels eines Spannrings schnell zu verschließen. Dabei erfolgt gleichzeitig auch die Abdichtung des Anoden- und Kathodenraums.

Beim Spannen des Spannrings wirkt nun nicht nur eine radiale Spannung auf den Rahmen, bzw. die Membran-Elektroden-Einheit. Insbesondere wird durch eine konische Form des Spannrings oder einer oder mehrerer Spannbacken die Membran-Elektroden-Einheit bzw. der Rahmen für die Membran-Elektroden-Einheit zusätzlich senkrecht zur radialen Spannrichtung zusammen gedrückt. Die konische Ausformung des Spannrings oder einer Spannbacke ist dabei nicht zwingend. Im Sinne dieser Erfindung sind damit alle geometrischen Ausgestaltungen mit umfasst, die bei Ausübung einer radialen Spannung des Spannrings zusätzlich eine Kraft senkrecht zur radialen Spannung auf den Rahmen, bzw. die Membran-Elektroden-Einheit ausüben.

Vorteilhaft kann der Spannring mit einer definierten Kraft beaufschlagt werden, um eine definierten Anpressdruck der Membran-Elektroden-Einheit zu erzielen. Ein weiterer Vorteil liegt in der einfachen Bedienbarkeit, die ein Spannring im Unterschied zu den in der Literatur beschriebenen, mindestens 4 Schrauben aufweist. Während bei der Verwendung eines Schraubenkranzes ständig zwischen den Schrauben gewechselt werden muss, um eine möglichst homogenen Kraftverteilung auf die Brennstoffzelle zu gewährleisten, reicht beim Spannring lediglich die Einstellung einer Schraube, um vorteilhaft die aufgebaute Kraft gleichmäßig auf die Membran-Elektroden-Einheit zu verteilen.

Die Flowfields werden anschließend eingebaut. Dazu weist die erfindungsgemäße Brennstoffzelle ferner neben der Verspannung der Membran-Elektroden-Einheit wenigstens zwei Vorrichtungen zur Aufnahme eines Flowfields auf, die jeweils seitlich an die Membran-Elektroden-Einheit angebracht werden können.

Geeignete Möglichkeiten der Befestigung dieser Vorrichtung an die Membran-Elektroden-Einheit sind beispielsweise Schrauben oder auch Klemmvorrichtungen, oder auch das Anschrauben der gesamten Vorrichtung über ein Gewinde.

Für den notwendigen Anpressdruck des Flowfields an eine Seite der Membran-Elektroden-Einheit ist ferner ein Stempel vorgesehen, der innerhalb der Vorrichtung zur Aufnahme des Flowfields angeordnet ist, und das Flowfield im angebauten Zustand auf die Membran-Elektroden-Einheit drückt. Dieser Stempel kann beispielsweise über eine Stellschraube einen definierten und reproduzierbaren Anpressdruck erzeugen. Der Anpressdruck der Flowfields ist somit unabhängig von dem durch den Spannring eingestellten Anpressdruck der Membran-Elektroden-Einheit.

Die separaten Vorrichtungen zur Aufnahme verschiedener Flowfieldplatten weisen insbesondere den Vorteil auf, dass diese leicht gewechselt werden können, ohne dass dabei die Membran-Elektroden-Einheit beeinträchtigt wird. Die Membran-Elektroden-Einheit bleibt in jedem Fall verspannt und liefert so vorteilhaft identische Rahmenbedingungen für einzelne Testläufe. Ebenso können auch unterschiedliche Gasdiffusionsschichten mit der gleichen Membran-Elektroden-Einheit vermessen werden, sofern es sich um separat auflegbare Gasdiffusionsschichten handelt.

Die erfindungsgemäße Brennstoffzelle weist insbesondere folgende Vorteile auf:
- Die Dichtung der Testzelle erfolgt über einen Spannring (bei runder Ausführungsform der Brennstoffzelle), der einfach, gleichmäßig und reproduzierbar die Kraft auf die Membran-Elektroden-Einheit überträgt.
- Die Membran-Elektroden-Einheit bleibt als eine Einheit unabhängig von wechselnden Flowfield Platten oder Gasdiffusionsschichten verspannt. Es kann ein definierter Anpressdruck unabhängig von dem der Flowfield Platten eingestellt werden. Damit werden zumindest durch die Membran-Elektroden-Einheit identische Rahmenbedingungen für verschiedene Testläufe geschaffen.
- Die separaten Vorrichtungen zur Aufnahme der Flowfield Platten können einzeln an die Membran-Elektroden-Einheit angebracht werden und ermöglichen einen leichten und problemlosen Austausch, ohne dass die Membran-Elektroden-Einheit demontiert werden muss.
- Der Anpressdruck der einzelnen Flowfields an die Membran-Elektroden-Einheit kann beispielsweise über einen Stempel einzeln definiert eingestellt werden.
- Neben dem leichten Wechsel von Flowfields ist auch der Austausch von Gasdiffusionsschichten der Membran-Elektroden-Einheit problemlos möglich.

Im Rahmen der Erfindung ist die runde Ausführungsform der Brennstoffzelle besonders vorteilhaft, aber nicht zwingend erforderlich. Bei einer quadratischen, bzw. rechteckigen Ausführung könnte auch wieder ein Schraubenkranz für die Verspannung der Membran-Elektroden-Einheit eingesetzt werden. Die separate Anbringung der Flowfields würde jedoch wie vorher beschrieben erfolgen. Die Vorteile der einfachen Handhabung beim Wechsel der Flowfields oder Gasdiffusionsschichten blieben dabei erhalten.

### Spezieller Beschreibungsteil

Nachfolgend wird der Gegenstand der Erfindung anhand von Figuren näher erläutert, ohne dass der Gegenstand der Erfindung dadurch beschränkt wird.
Es zeigen:

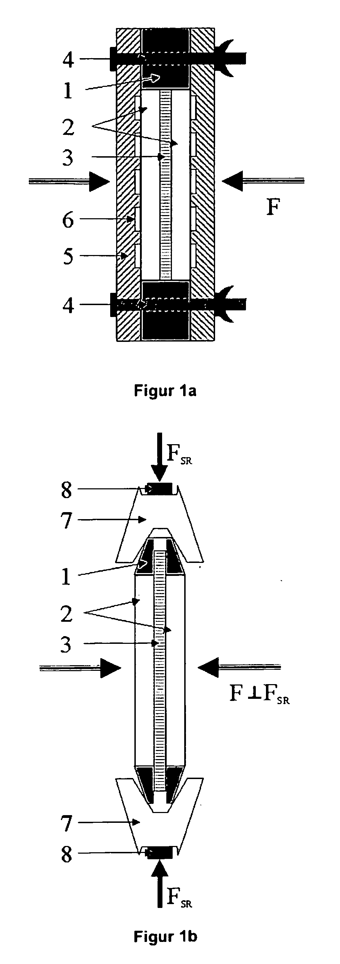

- Figur 1:: seitliche Ansicht auf eine Testzelle
a) gemäß dem Stand der Technik,
b) erfindungsgemäße Ausführungsform mit
   1 = Rahmen zur Aufnahme der Membran-Elektroden-Einheit,
   2 = Elektroden,
   3 = Membran,
   4 = Schraube,
   5 = Flowfield Platte,
   6 = Kanäle,
   7 = Spannbacken,
   8 = Spannring,
   F_{SR} = radiale Kraft beim Spannen des Spannrings,
   F ┴ F _{SR} = Kraft senkrecht zur radialen Kraft, bewirkt das Zusammenpressen der Elektroden auf die Membran.
- Figur 2:: Frontalansicht verschiedener Ausführungsformen der Testzelle mit
SB = Spannbacken,
SR = Spannring,
R = Rahmen zur Aufnahme einer Membran-Elektroden-Einheit ,
MEA = Membran-Elektroden-Einheit.
- Figur 3:: Schnittzeichnung einer erfindungsgemäßen Brennstoffzelle mit eingetragener Druckverteilung beim Einspannen mit
ρ_{DF} = Druck auf die Dichtflächen und
ρ_{MEA} = Druck auf die Membran-Elektroden-Einheit

In der Figur 1a ist die seitliche Ansicht einer Testzelle zu sehen, wie sie aus dem Stand der Technik bekannt ist. Die Verteilerplatten (Flowfield Platten) 5 und die Membran-Elektroden-Einheit 2 + 3 werden zusammengesetzt und durch eine gemeinsame Verschraubung 4, in der Regel ein Schraubenkranz, verspannt. Demgegenüber zeigt Figur 1b das Kernstück der erfindungsgemäßen Brennstoffzelle. Nur die Einzelteile der Membran-Elektroden-Einheit 2 + 3 werden ggfs. über einen Rahmen 1 und konisch zulaufende Spannbacken 7 durch einen Spannring 8 aufeinandergepresst und somit verspannt. Alternativ kann der Spannring auch selbst so beschaffen sein, dass er die Funktion der Spannbacken schon mit beinhaltet.

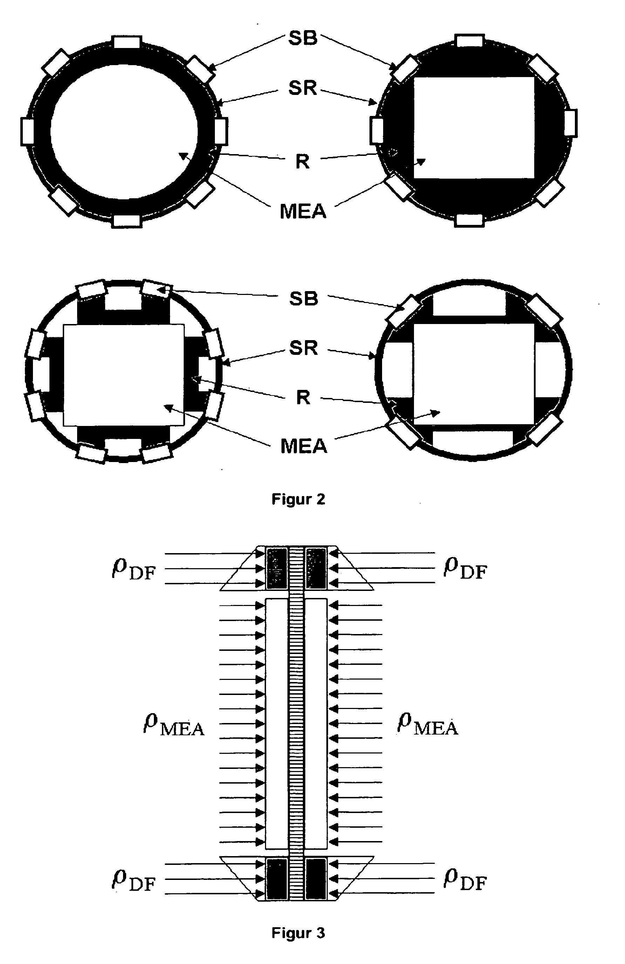

In der Figur 2 sind einige Ausgestaltungen der erfindungsgemäßen Brennstoffzelle aufgezeigt, die die Membran-Elektroden-Einheit betreffen. Sofern die Membran-Elektroden-Einheit selbst schon kreisförmig ausgebildet ist, kann vorteilhaft nur ein Spannring eingesetzt werden. Bei einer rechteckigen, bzw. quadratischen Membran-Elektroden-Einheit kann beispielsweise ein kreisförmiger Rahmen verwendet werden. In beiden Fällen sind zusätzliche Spannbacken optional einsetzbar. Alternativ bieten sich bei quadratischen, bzw. rechteckigen Membran-Elektroden-Einheiten auch nur einzelne Rahmenstücke an, die als Angriffspunkte für den Spannring dienen.

In der Figur 3 wird schematisch die Druckverteilung dargestellt. Beim Spannen des Spannringes wird ein dazu senkrechter, gleichmäßiger Druck auf die Dichtflächen, bzw. auf die Membran-Elektroden-Einheit ausgeübt.

## Patentansprüche

1. Brennstoffzelle umfassend eine Membran-Elektroden-Einheit und wenigstens zwei Flowfield Platten, **dadurch gekennzeichnet,**
**dass** die Membran-Elektroden-Einheit separat durch ein Mittel verspannt ist, und die einzelnen Flowfields separat an die Membran-Elektroden-Einheit verspannt sind.

2. Brennstoffzelle nach vorhergehendem Anspruch 1, mit wenigstens einer separaten Vorrichtung zur Aufnahme eines Flowfields und/oder einer Gasdiffusionsschicht an einer Seite der Membran-Elektroden-Einheit.

3. Brennstoffzelle nach Anspruch 2, bei dem die separate Vorrichtung an die Membran-Elektroden-Einheit anschraubbar oder mit Hilfe von Schrauben oder Klemmen an diese befestigbar ausgebildet ist.

4. Brennstoffzelle nach einem der vorhergehenden Ansprüche 2 bis 3, bei dem die separate Vorrichtung ein Mittel zum Anpressen des Flowfields an die Membran-Elektroden-Einheit aufweist.

5. Brennstoffzelle nach vorhergehendem Anspruch 4, mit einem Stempel als Mittel zum Anpressen des Flowfields an die Membran-Elektroden-Einheit.

6. Brennstoffzelle nach einem der vorhergehenden Ansprüche 1 bis 5, bei dem der Anpressdruck des Flowfields an die Membran-Elektroden-Einheit über eine Stellschraube einstellbar ist.

7. Brennstoffzelle nach einem der vorhergehenden Ansprüche 1 bis 6, bei der die Membran-Elektroden-Einheit kreisförmig ausgebildet ist.

8. Brennstoffzelle nach einem der vorhergehenden Ansprüche 1 bis 6, bei dem die Membran-Elektroden-Einheit in einem runden Rahmen angeordnet ist.

9. Brennstoffzelle nach einem der vorhergehenden Ansprüche 7 bis 8, bei der die Membran-Elektroden-Einheit durch einen Spannring verspannt ist.

10. Brennstoffzelle nach vorhergehendem Anspruch 9, bei dem der Spannring beim Spannen die radiale Kraft zumindest teilweise in eine Kraft senkrecht zur radialen Spannrichtung umzulenken vermag.

11. Brennstoffzelle nach vorhergehendem Anspruch 9, bei dem der Spannring zusätzlich Spannbacken aufweist, die beim Spannen des Spannringes die radiale Kraft zumindest teilweise in eine Kraft senkrecht zur radialen Spannrichtung umzulenken vermögen.

12. Brennstoffzelle nach vorhergehendem Anspruch 11, mit konischen Spannbacken.

## Claims

1. A fuel cell comprising a membrane-electrode unit and least two flow field plates, **characterized in that** the membrane-electrode unit is separately secured by a clamping means and the individual flow fields are separately clamped to the membrane-electrode unit.

2. A fuel cell according to the preceding Claim 1, having at least one separate device for accommodating a flow field and/or a gas diffusion layer to one side of the membrane-electrode unit.

3. A fuel cell according to Claim 2, in which the separate device can be bolted to the membrane-electrode unit or is formed to be securable to the membrane-electrode unit by means of bolting or clamping.

4. A fuel cell according to either of the preceding Claims 2 and 3, in which the separate device has means for pressing the flow field against the membrane-electrode unit.

5. A fuel cell according to the preceding Claim 4, having a piston as means for pressing the flow field against the membrane-electrode unit.

6. A fuel cell according to any of the preceding Claims 1 to 5, in which the force pressing the flow field against the membrane-electrode unit is adjustable by way of an adjusting bolt.

7. A fuel cell according to any of the preceding Claims 1 to 6, in which the membrane-electrode unit is formed to be circular in shape.

8. A fuel cell according to any of the preceding Claims 1 to 6, in which the membrane-electrode unit is accommodated in a circular frame.

9. A fuel cell according to either of the preceding Claims 7 and 8, in which the membrane-electrode unit is secured by a clamping ring.

10. A fuel cell according to the preceding Claim 9, in which, during clamping, the clamping ring is able to redirect the radial force at least in part into a force that is at right angles to the radial clamping direction.

11. A fuel cell according to the preceding Claim 9, in which the clamping ring has additional clamping jaws, which, during clamping of the clamping ring, are able to redirect the radial force at least in part into a force that is at right angles to the radial clamping direction.

12. A fuel cell according to the preceding Claim 11, having conical clamping jaws.

## Revendications

1. Pile à combustible comportant une unité électrodes-membrane et au moins deux plaques distributrices, dans laquelle l'unité électrodes-membrane est serrée séparément par un moyen et les différentes plaques distributrices sont serrées séparément contre l'unité électrodes-membrane.

2. Pile à combustible selon la revendication 1 précédente, comportant au moins un dispositif séparé destiné à recevoir une plaque distributrice et/ou une couche de diffusion de gaz sur un côté de l'unité électrodes-membrane.

3. Pile à combustible selon la revendication 2, dans laquelle le dispositif séparé peut être réalisé de manière à pouvoir être vissé contre l'unité électrodes-membrane ou de manière à pouvoir être fixé contre celle-ci au moyen de vis ou de pinces.

4. Pile à combustible selon l'une quelconque des revendications 2 à 3, dans laquelle le dispositif séparé comporte un moyen destiné à presser la plaque distributrice contre l'unité électrodes-membrane.

5. Pile à combustible selon la revendication 4 précédente, comportant un poinçon formant un moyen destiné à presser la plaque distributrice contre l'unité électrodes-membrane.

6. Pile à combustible selon l'une quelconque des revendications 1 à 5 précédentes, dans laquelle la pression d'appui de la plaque distributrice contre l'unité électrodes-membrane peut être réglée au moyen d'une vis de réglage.

7. Pile à combustible selon l'une quelconque des revendications 1 à 6 précédentes, dans laquelle l'unité électrodes-membrane est réalisée avec une forme circulaire.

8. Pile à combustible selon l'une quelconque des revendications 1 à 6 précédentes, dans laquelle l'unité électrodes-membrane est disposée dans un cadre rond.

9. Pile à combustible selon l'une quelconque des revendications 1 à 8 précédentes, dans laquelle l'unité électrodes-membrane est serrée au moyen d'une bague de serrage.

10. Pile à combustible selon la revendication 9 précédente, dans laquelle, au moment du serrage, la bague de serrage est apte à dévier la force radiale au moins en partie en une force perpendiculaire à la direction de serrage radiale.

11. Pile à combustible selon la revendication 9 précédente, dans laquelle la bague de serrage comporte en plus des mâchoires de serrage qui, lors du serrage de la bague de serrage, sont aptes à dévier la force radiale au moins en partie en une force perpendiculaire à la direction de serrage radiale.

12. Pile à combustible selon la revendication 11 précédente, comportant des mâchoires de serrage coniques.
